Europäisches Patentamt

European Patent Office

Office européen des brevets

(11) Publication number: **0 369 711 B1**

# EUROPEAN PATENT SPECIFICATION

(45) Date of publication of patent specification: **09.03.94**

(51) Int. Cl.5: **D21C 9/16,** D21C 9/10, D06L 3/02

(21) Application number: **89311726.7**

(22) Date of filing: **13.11.89**

(54) **Phosphate composition and uses thereof.**

(30) Priority: **11.11.88 GB 8826431**

(43) Date of publication of application:
**23.05.90 Bulletin 90/21**

(45) Publication of the grant of the patent:
**09.03.94 Bulletin 94/10**

(84) Designated Contracting States:
**AT BE CH DE ES FR GR IT LI LU NL SE**

(56) References cited:
**EP-A- 0 141 355**
**EP-A- 0 186 990**
**DE-A- 3 531 563**
**US-A- 4 294 575**

**TAPPI JOURNAL OF THE TECHNICAL ASSO-
CIATION OF THE PULP AND PAPER INDUS-
TRY, vol. 71, no. 6, June 1988, pages 171-174,
Nocross, Ga, US; K.Kuczynski et al.:
"DTPMPA: polyamino polyphosphonic acid
and its use in paper processes. Part 1: The
chemistry of pulp bleaching with DTPMPA
and its impact on fines retention.**

(73) Proprietor: **Albright & Wilson Limited
210-222 Hagley Road West
Oldbury Warley West Midlands B68 0NN(GB)**

(72) Inventor: **Jones, Trevor Eric
8 Milverton Close
Halesowen West Midlands B63 3OL(GB)**
Inventor: **Wilkins, Anthony James
3 Buttermere Close
Brierley Hill West Midlands DY5 3SD(GB)**

(74) Representative: **Savidge, Roger Gordon Madg-
wick et al
Albright & Wilson Limited
Patents Department
210-222 Hagley Road West
Oldbury
Warley, West Midlands B68 ONN (GB)**

EP 0 369 711 B1

**Description**

This invention relates to phosphate compositions, in particular ones for use in stabilising hydrogen peroxide.

Hydrogen peroxide is used to bleach cellulosic materials e.g. wood pulp or fabrics, but the effectiveness of the bleaching liquor is reduced in the absence of stabilisers against decomposition of the peroxide by transition metal ion e.g. iron and manganese in the cellulosic material or water. The commercially accepted stabiliser is sodium silicate but this gives rise to other problems e.g. corrosion and scaling. Phosphonates especially diethylene triamine penta (methylene phosphonic acid) and its water soluble salts have been proposed as stabilisers, but with pulps having significant metal contents or made with hard water the degree of bleaching (as shown by the brightness of the cellulosic material) and/or the peroxide stability is reduced.

It is disclosed in EP-A-0141355 that the bleaching of wood pulp by means of peroxides and/or sulphites may be carried out in the presence of phosphonic acids, phosphates and polyhydroxycarboxylic acids. Examples of such acids include gluconic and, citric acid, D.T.P.A. and E.D.T.A. and these acids are regarded as essential additives to the bleaching system.

It is disclosed in DE-A-3531563 that the bleaching of wood pulp, especially in the presence of heavy metal salts, requires a complex compound formed from the reaction of phosphonic acids, phosphates, and, again, polyhydroxycarboxylic acids.

The present invention provides a stabilised peroxide composition consisting of hydrogen perioxide and a stabilising additive therefor, characterised in that the additive consists of a first component (a) which is a water soluble amino organic phosphonic acid with at least 2 organo phosphonic acid groups, or a water soluble salt thereof, and a second component (b) which is orthophosphoric acid or a water soluble salt thereof, and in that the composition is substantially free of monomeric polyhydroxycarboxylic acids.

There is also provided a method of bleaching a cellulosic material with hydrogen peroxide, wherein the cellulosic material is contacted with an aqueous stabilised perioxide composition consisting of hydrogen peroxide and a stabilising additive therefor, characterised in that the additive consists of a first component (a) which is a water-soluble amino organic phosphonic acid or a water soluble salt of amino phosphonic acid, and a second component (b) which is orthophosphoric acid or a water-soluble salt thereof, and in that the stabilised peroxide composition is substantially free of monomeric polyhydroxy carboxylic acids. There is also provided a pulp bleaching medium, characterised by a cellulosic pulp and the stabilised peroxide composition of the present invention.

The use of a mixture of the said components (a) and (b) as a stabiliser for hydrogen peroxide in the bleaching of cellulosic material is also claimed.

The amino phosphonic acid contains primary secondary or tertiary amine groups, especially with amino groups only of the tertiary type, and at least 2 and usually 2-10 especially 3-6 organophosphonic acid groups; while the molecule may contain acidic groups other than phosphonic acid groups, such as carboxylic acid groups, these are preferably absent.

The aminoorganic phosphonic acid may be of formula I

$$H_2O_3PCR^1R^2N(R^3)[R^4N(R^7)]_nCR^5R^6PO_3H_2 \qquad (I)$$

wherein each of $R^1$, $R^2$, $R^5$, $R^6$, which is the same or different, represents a hydrogen atom or an optionally substituted aliphatic hydrocarbyl, alicyclic, aryl or aralkyl group, each preferably of 1-20, especially 1-8, carbon atoms for the aliphatic group or 5-10 carbon atoms in respect of alicyclic, aryl or aralkyl group, and each of $R^3$ and $R^7$, which is the same or different, is as defined for any one of $R^1$, $R^2$, $R^5$ and $R^6$ apart from hydrogen, or is a group of formula

$$-C(R^8)(R^9)PO_3H_2$$

wherein each of $R^8$ and $R^9$, which may be the same or different, is as defined for any of $R^1$, $R^2$, $R^5$ or $R^6$, and $R^4$ represents a divalent organic group eg of 1-10 carbon atoms, n is 0 or an integer of at least 1 e.g. 1-5 such as 1 or 2. The aliphatic hydrocarbyl group may be an alkyl or alkenyl group, such as methyl, ethyl, propyl or isopropyl group, butyl, amyl, hexyl, octyl, decyl or dodecyl group. Examples of the optional substituents are one or more alkoxy groups e.g. of 1-8 carbon atoms, hydroxy and halo groups. The alicyclic group may be a cyclopentyl or cyclohexyl group, while the aryl group may be a phenyl or naphthyl group which may optionally be substituted by at least one alkyl eg methyl, halo eg chloro or nitro substituent. The aralkyl group may be a benzyl or naphthylmethyl group, optionally substituted by at least one alkyl eg methyl, halo eg chloro or nitro substituent. Preferably $R^1$, $R^5$, and $R^9$ if present, represent

EP 0 369 711 B1

hydrogen atoms, and $R^2$, $R^6$ and $R^8$ if present, represent hydrogen atoms or alkyl or aryl eg phenyl or tolyl group. Most preferably each of $R^1$, $R^2$, $R^5$, $R^6$ and if present, $R^8$ and $R^9$, represent hydrogen atoms, while $R^3$ and $R^7$ preferably represent an alkyl group of 1-4 carbon atoms or alkoxyalkyl group e.g. 4-14 carbon atoms or the group of formula

$$-C(R^8)(R^9)PO_3H_2$$

The divalent group or groups $R^4$ may be an alkylene group eg of 1-6 carbon atoms such as 1,2 ethylene, 1-3 - propylene, 1,4 - butylene or 1,6-hexylene or other alpha, omega alkylene group, or phenylene eg 1,2 or 1,4 phenylene or cyclohexylene eg 1,1 or 1,4-cyclohexylene. Preferably $R^4$ is an ethylene group.

Thus preferred compounds are amino tris (methylene phosphonic acid), ethylene diamine tetra (methylene phosphonic acid) and other alkylene alpha, omega diamine tetra (methylene phosphonic acids), diethylene triamine penta(methylene phosphonic acid) (hereafter called DTPMPA) and triethylene tetramine hexa (methylene phosphonic acid), and other polyamine poly (alkylene phosphonates).

These crude amino organo phosphonic acids, made from the amine, aldehyde or ketone and phosphorous acid, preferably contain a majority of the desired phosphonic acid product eg 50-100% especially 50-80% and usually a minority of amino phosphonic acids with less than the optimum proportion of phosphonic acid groups per nitrogen atom; these other compounds can contain N-H groups or N-methyl groups in replacement of one or more but not all of the organo-phosphonic acid groups.

In this specification, unless otherwise stated, the percentage of amino organo phosphonic acids is expressed on the assumption that all acid species are amino organo phosphonic acids and that all the latter have organo phosphonate groups replacing every hydrogen atom bonded to a nitrogen atom in the amine of formula

$$H[N(R^3)R^4]_nNHR^7$$

wherein $R^4$ is as defined above and each of $R^3$ and $R^7$ is as defined for $R^1$. The analyses for the acid species can be performed by base titration.

The amino phosphonic acid may be present as the free acid but is preferably present as a water soluble partial or completely neutralised salt thereof e.g. an ammonium, organic ammonium, sodium or potassium salt, such as ones with 10-90% of the acidic hydrogen atoms replaced by the salt cation. Aqueous solution of the salts preferably have a pH of 0.5-10.

The phosphate component may be orthophosphoric or a water soluble salt thereof e.g. an alkali metal salt especially a sodium or potassium salt. The salt may be a mono di or tri alkali metal salt, among which mono sodium di hydrogen phosphate and/or di potassium hydrogen phosphate are preferred. When phosphoric acid is used, extra alkali e.g. sodium hydroxide solution is added prior to the bleach operation.

The weight proportion of phosphoric acid (or pro rata amounts of orthophosphate salt) to the amino phosphonic acid, especially ones of formula 1, (or pro rata amounts of the salts) is usually at least 0.5:1 preferably at least 1.5:1 e.g. 0.5:1 to 20:1 such as 1.5-20:1, 1.5-16:1 or in particular 2-20:1 e.g. 2-10:1 and especially 2-5:1; proportions of 6.75-10:1 may also give benefits. These proportions are particularly important for di ethylene triamine penta methylene phosphonic acid (hereinafter called DTPMPA) as the amino phosphonic acid, but also apply generally to other amino phosphonic acids either as such, or in pro rata amounts based on equal moles of the other amino phosphonic acid to DTPMPA. Thus the pro rata amounts based the ratio of the number of moles of phosphoric acid (or pro rata amounts of orthophosphate salt) to the number of moles of amino phosphonic acid, especially ones of formula 1, (or pro rata amounts of the salts) is usually at least 2.92:1 preferably at least 8.77:1 e.g. 2.92:1 to 117:1 such as 8.77-117:1, 8.77-93.5:1 or in particular 11.7-117:1 e.g. 11.7 - 58.5:1 and especially 11.7-29.2:1.

The proportion of phosphoric acid (or pro rata amounts of phosphate salt) to the amino phosphonic acid, (or pro rata amounts of the salts) is usually from 1.75 to 23.4:1 e.g. 2.34 to 23.4:1 in terms of the ratio of phosphorus atoms present in total in each category of compound.

The stabiliser compositions, the stabilised composition of hydrogen peroxide, (a) and (b) and the peroxide bleaching liquor or medium may also contain other additives used in peroxide bleaching liquors, such as inorganic e.g. sodium pyro and poly phosphates, but are substantially free of monomeric polyhydroxy carboxylic acids or amino poly carboxylic acids such as hydroxy aliphatic carboxylic acids such as gluconic or citric acid, amino polycarboxylic acids e.g with 2-6 carboxyl groups per molecule such as nitrilo triacetic acid, ethylene diamine tetraacetic acid, diethylene triamine penta acetic acid; the cellulose material itself may contain polymeric poly carboxylic acids and these may still be present. Preferably the stabiliser and stabilised compositions and the peroxide bleaching liquor and medium are also substantially

3

free from water soluble silicates such as sodium silicates and from pyro and poly phosphates. Preferably other compounds apart from the phosphonic acid (or salt) and phosphoric acid (or salt), having a stabilising effect on hydrogen peroxide in pulp bleaching are substantially absent also. Thus the stabiliser composition for stabilizing the hydrogen peroxide preferably consists essentially of the phosphonic acid (or salt), phosphoric acid (or salt) and water.

The stabiliser composition for mixing with the hydrogen peroxide to produce the stabilized peroxide composition or for adding in the production of the bleaching medium is usually in aqueous solution e.g. at pH 0.5-10 preferably 3-10, and often contains 2-20% e.g. 5-15% by weight of the amino phosphonic acid, and 10-70% e.g. 10-45% and especially 15-40% by weight of the phosphoric acid (expressed as anhydrous acid), with the remainder being usually substantially water.

The cellulosic material to be bleached may be in the form of individual fibres e.g. as in wood pulp or cotton fibres, or as yarn or woven or non woven fibres and includes wood, cotton, linen and jute and loose fibrous products obtained therefrom, but especially wood pulp, whose treatment is hereinafter exemplified. The pulp to be bleached is usually made by mechanical treatment, especially stoneground (SGW) thermomechanical (TMP) or chemithermomechanical pulping (CTMP) followed by screening of oversize material, optionally washing with water and then usually dilution with water and/or bleach liquor to the concentration ready for the bleaching step. The pulp may also have been derived from secondary pulp from deinked used paper products. The invention is of particular value when the water used in the production of the pulp is hard water, so the pulp has a significant calcium and/or magnesium content e.g. a total of Ca and Mg of at least 800 such as 1000-2500 especially 1000-2000 ppm (based on the oven dried weight of the pulp before dilution and bleaching). The invention is also of particular value with pulps having substantial amounts of calcium or at least 80 ppm total transition metals e.g. 80-350 ppm, usually with at least 50 ppm of Fe and/or Mn (based on the oven dried weight of pulp). The alkaline earth and transition metal ions are derived from the cellulosic material or the water or both. The water of dilution may be fresh soft or hard water or may be recycled plant water e.g. recycled bleach liquor or paper machine white water.

The amino phosphonic acid or salt and the phosphoric acid (or salt) may be added to the cellulosic material separately or together in the form of the stabiliser composition with adjustment of the pH to 8-12 e.g. 10-12 by addition of alkali; they may be added directly to the cellulosic material e.g. wet pulp before addition of hydrogen peroxide to give a bleach medium containing cellulosic material and aqueous bleach liquor in contact therewith. The amount of each additive in the bleach medium varies according to the nature of the pulp to be treated, the degree of bleaching desired, the amount of hydrogen peroxide, the hardness of the water and the transition metal content of the pulp, increases on the last 4 parameters usually requiring more additive. However, usually the amount of the phosphonic acid (or salt) (expressed as phosphonic acid) is 0.01-1% e.g. 0.02-0.5% and especially 0.04-0.3% and the amount of the phosphoric acid (or salt) (expressed as phosphoric acid) is 0.05-2% e.g. 0.05-1% especially 0.1-0.8% e.g. 0.22-0.8%, while the total of phosphonic acid and phosphoric acid in the bleaching medium is usually at least 0.1% especially at least 0.2% such as 0.2-3% or 0.2-1%, especially at least 0.22% e.g. 0.25-0.7%, in all cases based on the dry weight of cellulosic material e.g. pulp in the bleach medium. In relation to the total volume of the bleach medium, the amount of phosphonic acid (or salt) is usually 0.01-1.5g/l e.g. 0.03-0.8 or 0.06-0.5g/l, the amount of phosphoric acid (or salt) is usually 0.08-3g/l e.g. 0.08-1.5g/l or 0.15-1g/l and the total of phosphonic acid (or salt) and phosphoric acid (or salt) is usually at least 0.15g/l e.g. at least 0.3g/l such as 0.3-4.5g/l or 0.3-1.5g/l especially 0.35-1.1g/l.

The pulp is bleached with hydrogen peroxide which is usually present in amount of 0.5-10% especially 1-5% by weight (based on the dry weight of the pulp); compounds decomposable in the bleach liquor to hydrogen peroxide may also be used in equivalent amounts. In relation to the amount of hydrogen peroxide in the bleach liquor, the amount of the phosphonic acid (or salt) is usually 1-15% e.g. 1-10% especially 2-10% e.g. 2-6% by weight, the amount of phosphoric acid (or salt) is usually 5-35% e.g. 8-25% such as 8-15% by weight and the total of phosphonic acid (or salt) and phosphoric acid (or salt) is usually 10-40% such as 10-30% especially 10-20% by weight. The pulp in the bleaching operation usually has a cellulosic material solids content (herein-after called the pulp consistency) of 10-50% preferably 10-35% by weight. The bleach medium containing the wet pulp may contain at least 5 ppm Ca e.g. 5-100 ppm Ca but especially at least 100 ppm Ca such as 100-400 ppm e.g. 150-300 ppm Ca with at least 2 ppm Mg e.g. 2-20 ppm Mg but especially at least 20 ppm Mg such as 20-50 ppm Mg. In addition the bleach medium also usually contains aluminium and/or transition metal ions e.g. iron and/or manganese usually in amounts of at least 3 ppm of Fe and/or Mn and/or Al and at least 5 ppm in total e.g. 5-15 ppm each but especially at least 15 ppm in total e.g. 15-50 ppm (based on the total weight of pulp including water).

The bleach operation is usually performed at a temperature of 20-150°C especially 50-80°C at an initial pH of 10-11.5, which reduces to 6-10 by the end of the operation which usually takes 0.5-4 hr.

The compositions as hereinbefore described may also be used in a method of bleaching fabrics woven, spun or knitted from cellulosic fibres such as natural fibres e.g. cotton, ramie or flax, regenerated fibres e.g. viscose or cuprammonium rayon fibres, or blended fibres wherein one fibre is mixed with an amount e.g. a minority amount (such as 1-50%) of a coblendable fibre such as other material fibres such as wool or synthetic fibres such as polyester, polyamide or acrylic such as modacrylic fibres. Thus blends of 60-80% cotton with 20-40% polyester may be used. Suitable fabrics for bleaching may have a weight of 0.05-1.00 Kg/m$^2$ such as 0.1-1.00 Kg/m$^2$ but usually 0.15-0.40 Kg/m$^2$. The substrate fibres may also be in the form of thread or non woven fibres. In a fabric the warp and weft fibres are preferably the same, but may be different. The fabrics bleached by this method may for example be cotton or cotton polyester shirting or sheeting or curtain fabric. In the bleaching method the fabric may be treated for from 0.1 second to 2 minutes in a peroxide bath maintained at 50-150°C e.g. 70-110°C most usually 85-90°C containing from 0.5-4% e.g. 1-2% of hydrogen peroxide and from 10-200% e.g. 25-75% (based on the amount of the amount of peroxide) of a composition of components (a) and (b) as hereinbefore described and preferably also a wetting agent especially a volatile wetting agent . Alternatively the bath composition as hereinbefore described may be sprayed straight onto the fabric. The process may be continuous or batchwise, may be repeated once or more and may optionally be followed by heating and/or neutralisation with e.g. citric acid and/or rinsing and/or drying steps. The bleaching process may continue after the material has been removed from the bath, and even until the material is rinsed.

The method of the invention can provide a bleached cellulosic material e.g. pulp or fabric of desired brightness with minimum number and amount of additives, particularly the synergistic mixture of phosphonic acid (or salt) and phosphoric acid (or salt), especially in relation to commercial silicate processes.

The invention is illustrated in the following Examples, in which in Examples 1-6 the amounts of additives (dosages) are expressed in terms of the dry weights of the additives against the dry weight of the pulp.

## Example 1

Stabiliser compositions were prepared by mixing an aqueous solution of partly neutralised DTPMPA (as its disodium salt), and orthophosphoric acid with water, in various proportions.

A thermomechanical wood pulp produced with hard water had a consistency of 24% (76% water) and contained 4 Fe, 47 Mn, less than 6 in total of Cu, Ni, Co, 260 Ca and 47 Mg, the amounts being expressed as ppm on the pulp (ie not on dry pulp). The pulp was diluted with bleach liquor to give a bleach medium of 15% consistency and containing 2.5 Fe, 29 Mn, less than 4 in total of Cu, Ni, Co, 163 Ca and 29 Mg ppm on the total medium. The bleach liquor contained 0.8% (expressed on dry pulp) of the stabiliser mixtures having a variety of proportions of DTPMPA and ortho phosphoric acid and the rest water in amounts shown below, and 2% hydrogen peroxide (expressed by weight as hydrogen peroxide on the weight of dry pulp), as well as amounts of sodium hydroxide so that the initial pH of the bleach medium was in the range 10-10.8. The bleaching operation was performed at 60°C for 2 hours. After the bleach operation, the bleached pulp was converted into sheets, whose brightness level was determined according to TAPPE and the results expressed in ISO units*. The brightness of the paper made from the unbleached pulp was also tested and found to be 53.9 °1SO. The table below shows the results obtained. The contents of the DTPMPA (as dry solid) and orthophosphoric acid (as anhydrous material) in the bleach medium are expressed in terms of the dry weight of the pulp.

| EXPERIMENT | In Stabiliser | | In Bleached Medium | | | Brightness °1SO |
|---|---|---|---|---|---|---|
| | WT% of DTPMPA | Wt% of Phosphoric | Wt% DTPMPA | Wt% Phosphoric | Wt% Total | |
| A | 13.5 | 50 | 0.11 | 0.40 | 0.51 | 66.6 |
| B | 13.5 | 33 | 0.11 | 0.27 | 0.37 | 65.9 |
| C | 9 | 50 | 0.07 | 0.40 | 0.47 | 66.3 |
| D | 9 | 33 | 0.07 | 0.27 | 0.34 | 65.3 |
| E | 9 | 27 | 0.07 | 0.22 | 0.29 | 64.9 |
| F | 4.5 | 49 | 0.04 | 0.40 | 0.43 | 65.9 |
| G | 4.5 | 33 | 0.04 | 0.27 | 0.30 | 64.8 |
| Comp H | 45 | 0 | 0.36 | 0 | 0.36 | 64.1 |
| Comp J | 28.1 | 0 | 0.22 | 0 | 0.22 | 63.8 |
| Comp K | 0 | 66 | 0 | 0.53 | 0.53 | 65.1 |

The initial pH values in the bleach media were 10.5, 10.3, 10.5, 10.4, 10.4, 10.3, 10.2, 10.8, 10.2 and 10.0 for Experiment A-K respectively, the pH values varying between the experiments in order to obtain an overall peroxide consumption in each case in the 2 hours of 70 ± 5%.

## Example 2

The process of Example 1 was repeated with a different pulp, different bleach conditions and different amounts of stabiliser.

The pulp was a chemithermomechanical pulp produced with hard water and of 20.4% consistency (79.6% water)containing in ppm based on the wet pulp 16 Fe, 9 Mn, less than 6 in total of Co, Cu, Ni, 280 Ca and 45 Mg. The pulp was diluted with bleach liquor to 15% consistency to give the bleach medium containing 12 Fe, 7 Mn, less than 4 in total of Cu, Co, Ni, 206 Ca amd 33 Mg (expressed in ppm on the total bleach medium).

The bleach liquor contained the stabiliser mixtures in varying proportions and 4% hydrogen peroxide (based on dry pulp) and sodium hydroxide so that the pH of the bleach medium obtained was about 11. The bleaching operation was performed at 60°C for 4 hours. The brightness of unbleached pulp was 56.2° ISO.

The results, expressed as before, were as follows:

| EXPERIMENT | In Stabiliser | | In Bleach Medium | | | Brightness |
|---|---|---|---|---|---|---|
| | Wt% of DTPMPA | Wt% of Phosphoric | Wt% of DTPMPA | Wt% Phosphoric | Wt% Total | |
| L | 9 | 27 | 0.18 | 0.54 | 0.72 | 79.4 |
| M | 13.5 | 33 | 0.20 | 0.50 | 0.70 | 79.5 |
| N | 9 | 27 | 0.22 | 0.68 | 0.90 | 80.2 |
| Comp P | (sodium silicate (53° Baume) solution at 4% on pulp | | | | 1.88 | 79.5 |
| Comp Q | 0 | 66 | 0 | 1.33 | 1.33 | 73.9 |
| Comp R | 45 | 0 | 0.23 | 0 | 0.23 | 76.4 |

The initial pH values in the bleach media for Experiments K-P were 11.2, 10.9, 11.0, 11.0, 10.5 and 10.9 respectively, the pH values varying between the experiments in order to obtain an overall peroxide consumption in each case in the 4 hours of 75 ± 5%.

## Example 3(a)

A peroxide stabilising composition was prepared by mixing the following ingredients, and its pH was then measured as 5.4.

| Diethylene triamino pentamethylene phosphonic acid | 9.0% |
| Orthophosphoric acid | 27.2% |
| Sodium hydroxide | 15.0% |
| Water | To 100% |

## Example 3(b)

In a continuous paper pulp bleaching process plant in which the chemithermomechanically produced paper pulp had metal ion concentrations of Fe 13ppm, Mn 7ppm, Co<2ppm, Cu<2ppm, Ni<2ppm, Ca 244ppm, Mg 29ppm, Na 868ppm, K 75ppm, Al 324ppm (based upon the wet weight of the bleach medium), the sodium silicate normally used as the peroxide stabiliser was replaced by the composition of Example 3-(a). The paper pulp bleaching medium was sampled before and after the replacement of the sodium silicate. The brightness of each sample was monitored with time without further addition of additives. The conditions of bleaching and the brightness were as shown below. This pulp had an average unbleached brightness of 60.3 °ISO.

## Example 4

In an experiment substantially the same as that described in Example 3(b) but with different dosage rates of peroxide and peroxide stabiliser, the following results were obtained. This pulp had an average unbleached brightness of 66.2 °ISO.

Comparative results

| Additive | Continuous dosage rate | Time elapsed since sample removed/min | pH | Brightness /°ISO |
|---|---|---|---|---|
| Sodium Silicate | 4.0% | | | |
| Sodium Hydroxide | 3.2% | | | |
| Hydrogen peroxide | 4.9% | | | |
| | | 60 | 9.6 | 79.0 |
| Consistency | 13.57% | 120 | 9.4 | 80.6 |
| | | 180 | 9.1 | 80.9 |
| Temperature | 57° C | 240 | 9.0 | 81.2 |

Sample taken after 4 hours 15 minutes

| Additive | Continuous dosage rate | Time elapsed since sample removed/min | pH | Brightness /°ISO |
|---|---|---|---|---|
| Hydrogen peroxide | 4.7% | | | |
| Sodium hydroxide | 3.5% | | | |
| Composition | | 60 | 9.7 | 77.7 |
| (example 3(a) | 2.0% | 120 | 9.6 | 80.2 |
| | | 180 | 9.45 | 81.3 |
| Consistency | 13.10% | 240 | 9.15 | 81.8 |
| Temperature | 56°C | | | |

## Example 5

The process of Example 1 was repeated at 60 °C upon a portion of thermomechanically produced paper pulp manufactured using hard water. The following results were recorded. The pulp had a consistency of 15% and an analysis as follows:

| Metal | Fe | Mn | Co | Cu | Ni | Al | Ca | Mg | Na | K |
|---|---|---|---|---|---|---|---|---|---|---|
| metal concentration in bleach medium/ppm | 3 | 29 | <2 | <2 | <2 | 3 | 163 | 29 | 20 | 60 |

8

| Additive | Dosage |
|---|---|
| Hydrogen peroxide | 2.0% |
| Sodium hydroxide | 1.6% |
| Orthophosphoric acid | 0.41% |
| Diethylene triamino pentamethylene phosphonic acid | 0.11% |

| | Sample age 0 min | Sample age 120 min |
|---|---|---|
| pH | 10.5 | 7.2 |
| Brightness/°ISO | 53.9 | 66.6 |

## Example 6

The process of Example 1 was repeated at 60°C upon a portion of thermomechanically produced paper pulp manufactured using hard water. The following results were recorded. The pulp had a consistency of 15% and an analysis as follows with metal ion concentrations as recorded for Example 3(b).

| Additive | Dosage |
|---|---|
| Hydrogen peroxide | 4.0% |
| Sodium hydroxide | 4.4% |
| Phosphoric acid | 0.68% |
| Diethylene triamino pentamethylene phosphonic acid | 0.27% |

| | Sample age 0 min | Sample age 240 min |
|---|---|---|
| p | 10.9 | 9.0 |
| Brightness/°ISO | 62.0 | 80.0 |

## Claims

1. A stabilised peroxide composition consisting of hydrogen peroxide and a stabilising additive therefor, characterised in that the additive consists of a first component (a) which is a water-soluble amino organic phosphonic acid with at least 2 organo phosphonic acid groups, or a water soluble salt thereof, and a second component (b) which is ortho-phosphoric acid or a water soluble salt thereof, and in that the composition is substantially free of monomeric polyhydroxycarboxylic acids.

2. A composition according to Claim 1 characterised in that component (a) is a compound of formula (I) or a partially or wholly neutralised salt thereof

$$H_2O_3PCR^1R^2N(R^3)[R^4N(R^7)]_nCR^5R^6PO_3H_2 \qquad (I)$$

wherein each of $R^1$, $R^2$, $R^5$, $R^6$, which are the same or different, represents a hydrogen atom or an optionally substituted aliphatic hydrocarbyl, alicyclic, aryl or aralkyl group, and each of $R^3$ and $R^7$, which is the same or different, is as defined for any one of $R^1$, $R^2$, $R^5$ and $R^6$ apart from hydrogen, or is a group of formula

$$-C(R^8)(R^9)PO_3H_2$$

wherein each of $R^8$ and $R^9$, which may be the same or different, is as defined for any of $R^1$, $R^2$, $R^5$ or

$R^6$, and $R^4$ represents a divalent organic group, n is 0 or an integer of at least 1, the weight ratio of component (b) (expressed as anhydrous acid) to component (a) (expressed as phosphonic acid) being 1.5-20:1, for example 2-20:1.

3. A composition according to Claims 1 or 2, characterised in that the molar ratio of component (a) to component (b) is from 1:8.77 to 1:117.

4. A composition according to any one of Claims 1 to 3, characterised in that each of $R^1$, $R^2$, $R^5$ and $R^6$ is hydrogen, $R^4$ is an alkylene group and $R^7$ is a group of the formula $-CH_2PO_3H_2$.

5. A composition according to Claim 4, characterised in that component (a) is diethylene triamine pentakis (methylene phosphonic acid) or a water soluble salt thereof.

6. A composition according to any one of Claims 1 to 5, characterised in that the weight ratio of components (a):(b) is from 1:2 to 1:10, for example from 1:6.75 to 1:10.

7. A composition according to any one of Claims 1 to 6, characterised in that the weight proportion of hydrogen peroxide to components (a) and (b) is 100:(1 to 10):(5 to 35).

8. A composition according to any one of Claims 1 to 7, characterised in that it consists of hydrogen peroxide, components (a) and (b) and water.

9. A pulp bleaching medium, characterised by a cellulosic pulp and a composition according to any one of Claims 1 to 8.

10. A method of bleaching a cellulosic material with hydrogen peroxide, wherein the cellulosic material is contacted with an aqueous stabilised peroxide composition consisting of hydrogen peroxide and a stabilising additive therefor, characterised in that the additive consists of a first component (a) which is a water-soluble amino organic phosphonic acid, or a water soluble salt thereof, and a second component (b) which is orthophosphoric acid or a water soluble salt thereof, and in that the stabilised peroxide composition is substantially free of monomeric polyhydroxycarboxylic acids.

11. A method according to Claim 11, characterised in that the cellulosic material is contacted with an aqueous solution of a composition as claimed in any one of Claims 2 to 10.

12. A method according to Claim 10 or 11, characterised in that the mixture of stabilised peroxide composition and cellulosic material contains at least 15 ppm in total of transition metals and aluminium, for example at least 100 ppm of calcium and at least 20 ppm of magnesium.

13. A method according to any one of Claims 10 to 12, characterised in that the cellulosic material is mechanically or thermo mechanically prepared wood pulp.

14. A method according to Claim 13, characterised in that the pulp is treated at 50-80°C for 0.5-4 hr.

15. A method according to Claim 13 or 14, characterised in that the stabilised peroxide composition contains 0.5-10% of hydrogen peroxide, 0.005-1% of component (a) and 0.025-3.5% of component (b).

16. A method according to any one of Claims 13-15, characterised in that the amount of component (b) is greater than 0.22% when expressed as anhydrous phosphoric acid, with respect to dry weight of the cellulosic material.

17. A method according to any one of Claims 10 to 12, characterised in that the cellulosic material is a cellulosic woven textile fabric.

18. A method according to Claim 17, characterised in that the fabric is contacted at 80-150°C for from 0.1 seconds to 2 mins.

**19.** A method according to Claims 17 or 18, <u>characterised in that</u> the cellulosic woven textile fabric is contacted with a stabilised peroxide composition additionally containing a wetting agent.

**20.** The use of a mixture of components (a) and (b) as defined in any one of Claims 1 to 8 as a stabiliser for hydrogen peroxide in the bleaching of a cellulosic material.

**Patentansprüche**

**1.** Stabilisierte Peroxid-Zusammensetzung, bestehend aus Wasserstoffperoxid und einem Zusatzstoff, der dieses stabilisiert, dadurch gekennzeichnet, daß der Zusatzstoff aus einer ersten Komponente (a), welche eine wasserlösliche Aminoorganophosphonsäure mit mindestens 2 Organophosphonsäuregruppen oder ein wasserlösliches Salz davon ist, und aus einer zweiten Komponente (b), welche Orthophosphorsäure oder ein wasserlösliches Salz davon ist, besteht und daß die Zusammensetzung im wesentlichen frei von monomeren Polyhydroxycarbonsäuren ist.

**2.** Zusammensetzung nach Anspruch 1, dadurch gekennzeichnet, daß die Komponente (a) eine Verbindung der Formel (I) oder ein teilweise oder vollständig neutralisiertes Salz davon ist:

$$H_2O_3PCR^1R^2N(R^3)[R^4N(R^7)]_nCR^5R^6PO_3H_2 \qquad (I)$$

in der $R^1$, $R^2$, $R^5$, $R^6$, die identisch oder verschieden sind, jeweils ein Wasserstoffatom oder eine gegebenenfalls substituierte aliphatische Kohlenwasserstoffgruppe, alicyclische Gruppe, Aryl- oder Aralkylgruppe darstellen und $R^3$ und $R^7$, die identisch oder verschieden sind, jeweils der Definition von $R^1$, $R^2$, $R^5$ und $R^6$ - abgesehen von Wasserstoff - entsprechen oder eine Gruppe der Formel

$$-C(R^8)(R^9)PO_3H_2$$

darstellen, in der $R^8$ und $R^9$, die identisch oder verschieden sein können, jeweils der Definition von $R^1$, $R^2$, $R^5$ oder $R^6$ entsprechen, und $R^4$ eine divalente organische Gruppe darstellt, n = 0 oder eine ganze Zahl mit einem Wert von mindestens 1 ist, wobei das Gewichtsverhältnis von Komponente (b) (gerechnet als wasserfreie Säure) zu Komponente (a) (gerechnet als Phosphonsäure) 1,5-20:1, zum Beispiel 2-20:1, beträgt.

**3.** Zusammensetzung nach Anspruch 1 oder 2, dadurch gekennzeichnet, daß das Molverhältnis von Komponente (a) zu Komponente (b) 1:8,77 bis 1:117 beträgt.

**4.** Zusammensetzung nach irgendeinem der Ansprüche 1 bis 3, dadurch gekennzeichnet, daß $R^1$, $R^2$, $R^5$ und $R^6$ jeweils Wasserstoff sind, $R^4$ eine Alkylengruppe ist und $R^7$ eine Gruppe der Formel $-CH_2PO_3H_2$ darstellt.

**5.** Zusammensetzung nach Anspruch 4, dadurch gekennzeichnet, daß die Komponente (a) Diethylentriamin-pentakis-(methylenphosphonsäure) oder ein wasserlösliches Salz davon ist.

**6.** Zusammensetzung nach irgendeinem der Ansprüche 1 bis 5, dadurch gekennzeichnet, daß das Gewichtsverhältnis der Komponenten (a):(b) 1:2 bis 1:10, zum Beispiel 1:6,75 bis 1:10, beträgt.

**7.** Zusammensetzung nach irgendeinem der Ansprüche 1 bis 6, dadurch gekennzeichnet, daß das Gewichtsverhältnis von Wasserstoffperoxid zu den Komponenten (a) und (b) 100:(1 bis 10):(5 bis 35) beträgt.

**8.** Zusammensetzung nach irgendeinem der Ansprüche 1 bis 7, dadurch gekennzeichnet, daß sie aus Wasserstoffperoxid, den Komponenten (a) und (b) und Wasser besteht.

**9.** Zellstoff-Bleichmedium, gekennzeichnet durch eine Zellulosemasse und eine Zusammensetzung nach irgendeinem der Ansprüche 1 bis 8.

**10.** Verfahren zum Bleichen eines Zellulosematerials mit Wasserstoffperoxid, bei dem das Zellulosematerial mit einer wässerigen stabilisierten Peroxid-Zusammensetzung in Kontakt gebracht wird, die aus Wasserstoffperoxid und einem Zusatzstoff, der dieses stabilisiert, besteht, dadurch gekennzeichnet, daß der Zusatzstoff aus einer ersten Komponente (a), welche eine wasserlösliche Aminoorganophosphonsäure oder ein wasserlösliches Salz davon ist, und aus einer zweiten Komponente (b), welche Orthophosphorsäure oder ein wasserlösliches Salz davon ist, besteht und daß die stabilisierte Peroxid- Zusammensetzung im wesentlichen frei von monomeren Polyhydroxycarbonsäuren ist.

11. Verfahren nach Anspruch 11, dadurch gekennzeichnet, daß das Zellulosematerial mit einer wässerigen Lösung einer Zusammensetzung, wie sie in irgendeinem der Ansprüche 2 bis 10 beansprucht wird, in Kontakt gebracht wird.

12. Verfahren nach Anspruch 10 oder 11, dadurch gekennzeichnet, daß die Mischung aus stabilisierter Peroxid-Zusammensetzung und Zellulosematerial insgesamt mindestens 15 ppm Übergangsmetalle und Aluminium enthält, beispielsweise mindestens 100 ppm Calcium und mindestens 20 ppm Magnesium.

13. Verfahren nach irgendeinem der Ansprüche 10 bis 12, dadurch gekennzeichnet, daß das Zellulosematerial mechanisch oder thermomechanisch bereiteter Zellstoff ist.

14. Verfahren nach Anspruch 13, dadurch gekennzeichnet, daß der Zellstoff 0,5-4 h bei 50-80°C behandelt wird.

15. Verfahren nach Anspruch 13 oder 14, dadurch gekennzeichnet, daß die stabilisierte Peroxid-Zusammensetzung 0,5-10% Wasserstoffperoxid, 0,005-1% der Komponente (a) und 0,025-3,5% der Komponente (b) enthält.

16. Verfahren nach irgendeinem der Ansprüche 13 bis 15, dadurch gekennzeichnet, daß, bezogen auf das Trockengewicht des Zellulosematerials, die Menge an Komponente (b), gerechnet als wasserfreie Phosphorsäure, größer ist als 0,22%.

17. Verfahren nach irgendeinem der Ansprüche 10 bis 12, dadurch gekennzeichnet, daß das Zellulosematerial ein Zellulose-Textilgewebe ist.

18. Verfahren nach Anspruch 17, dadurch gekennzeichnet, daß das Gewebe 0,1 Sekunde bis 2 Minuten lang bei 80-150°C in Kontakt gebracht wird.

19. Verfahren nach Anspruch 17 oder 18, dadurch gekennzeichnet, daß das Zellulose-Textilgewebe mit einer stabilisierten Peroxid-Zusammensetzung in Kontakt gebracht wird, die zusätzlich ein Netzmittel enthält.

20. Verwendung einer Mischung aus den Komponenten (a) und (b), wie sie in irgendeinem der Ansprüche 1 bis 8 definiert ist, als Stabilisator für Wasserstoffperoxid beim Bleichen von Zellulosematerial.

**Revendications**

1. Composition de peroxyde stabilisé composée de peroxyde d'hydrogène et d'un additif stabilisateur à cet effet, caractérisée en ce que l'additif se compose d'un premier composant (a) qui est un acide aminophosphonique organique hydrosoluble ayant au moins 2 radicaux d'acide organophosphonique ou un sel hydrosoluble de celui-ci, et un deuxième composant (b) qui est un acide orthophosphorique ou un sel hydrosoluble de celui-ci et en ce que la composition est essentiellement exempte d'acides polyhydroxycarboxyliques monomères.

2. Composition selon la revendication 1, caractérisée en ce que le composant (a) est un composé de formule (I) ou un sel partiellement ou totalement neutralisé de celui-ci

$$H_2O_3PCR^1R^2N(R^3)[R^4N(R^7)]_nCR^5R^6PO_3H_2 \qquad (I)$$

dans laquelle chacun des radicaux $R^1$, $R^2$, $R^5$, $R^6$, identiques ou différents, représente un atome d'hydrogène ou un radical aliphatique, hydrocarbyle, alicyclique, aryle ou aralkyle optionnellement

EP 0 369 711 B1

substitué et chacun des radicaux $R^3$ et $R^7$, identiques ou différents, répond à la définition d'un quelconque $R^1$, $R^2$, $R^5$ et $R^6$, hormis l'hydrogène, ou est un radical de formule

$-C(R^8)(R^9)PO_3H_2$

dans laquelle chacun des radicaux $R^8$ et $R^9$, identiques ou différents, répond à la définition d'un quelconque $R^1$, $R^2$, $R^5$ ou $R^6$ et $R^4$ représente un radical organique divalent, n est égal à 0 ou à un nombre entier d'au moins 1, le rapport pondéral du composant (b) (exprimé comme un acide anhydre) au composant (a) (exprimé comme l'acide phosphonique) étant de 1,5-20:1, par exemple 2-20:1.

3. Composition selon les revendications 1 ou 2, caractérisée en ce que le rapport molaire du composant (a) au composant (b) est de 1:8,77 à 1:117.

4. Composition selon l'une des revendications 1 à 3, caractérisée en ce que chacun des radicaux $R^1$, $R^2$, $R^5$ et $R^6$ désigne l'hydrogène, $R^4$ est un radical alkylène et $R^7$ est un radical de formule $-CH_2PO_3H_2$.

5. Composition selon la revendication 4, caractérisée en ce que le composant (a) est un acide pentakisméthylènephosphonique de diéthylènetriamine ou un sel hydrosoluble de celui-ci.

6. Composition selon l'une quelconque des revendications 1 à 5, caractérisée en ce que le rapport pondéral des composants (a):(b) est de l'ordre de 1:2 à 1:10, par exemple de 1:6,75 à 1:10.

7. Composition selon l'une quelconque des revendications 1 à 6, caractérisée en ce que la proportion pondérale du peroxyde d'hydrogène aux composants (a) et (b) est de 100:(1 à 10):(5 à 35).

8. Composition selon l'une quelconque des revendications 1 à 7, caractérisée en ce qu'elle se compose de peroxyde d'hydrogène, des composants (a) et (b) et d'eau.

9. Agent de blanchiment de pâte, caractérisé par une pâte cellulosique et une composition selon l'une quelconque des revendications 1 à 8.

10. Procédé de blanchiment d'une matière cellulosique avec du peroxyde d'hydrogène dans lequel la matière cellulosique est mise en contact avec une composition aqueuse de peroxyde stabilisé composée de peroxyde d'hydrogène et d'un additif stabilisateur à cet effet, caractérisé en ce que l'additif se compose d'un premier composant (a) qui est un acide aminophosphonique organique hydrosoluble ou un sel hydrosoluble de celui-ci et un deuxième composant (b) qui est un acide orthophosphorique ou un sel hydrosoluble de celui-ci et en ce que la composition de peroxyde stabilisé est essentiellement exempte d'acides polyhydroxycarboxyliques monomères.

11. Procédé selon la revendication 11, caractérisé en ce que la matière cellulosique est mise en contact avec une solution aqueuse d'une composition selon l'une quelconque des revendications 2 à 10.

12. Procédé selon la revendication 10 ou 11, caractérisé en ce que le mélange de la composition de peroxyde stabilisé et de matière cellulosique contient au moins 15 ppm au total de métaux de transition et d'aluminium, par exemple au moins 100 ppm de calcium et au moins 20 ppm de magnésium.

13. Procédé selon l'une quelconque des revendications 10 à 12, caractérisé en ce que la matière cellulosique est de la pâte à papier préparée mécaniquement ou thermomécaniquement.

14. Procédé selon la revendication 13, caractérisé en ce que la pâte est traitée à 50-80°C pendant 0,5 à 4 h.

15. Procédé selon la revendication 13 ou 14, caractérisé en ce que la composition de peroxyde stabilisé contient 0,5 à 10 % de peroxyde d'hydrogène, 0,005 à 1% de composant (a) et 0,025 à 3,5 % de composant (b).

16. Procédé selon l'une quelconque des revendications 13 à 15, caractérisé en ce que la quantité de composant (b), exprimée en acide phosphorique anhydre, est supérieure à 0,22 % par rapport au poids

13

sec de matière cellulosique.

17. Procédé selon l'une quelconque des revendications 10 à 12, caractérisé en ce que la matière cellulosique est un tissu textile tissé cellulosique.

18. Procédé selon la revendication 17, caractérisé en ce que le tissu est mis en contact à 80-150°C pendant 0,1 seconde à 2 minutes.

19. Procédé selon l'une des revendications 17 ou 18, caractérisé en ce que le tissu textile tissé cellulosique est mis en contact avec une composition de peroxyde stabilisé contenant par ailleurs un agent mouillant.

20. Utilisation d'un mélange de composants (a) et (b) comme défini dans l'une quelconque des revendications 1 à 8 comme stabilisateur pour le peroxyde d'hydrogène dans le blanchiment d'une matière cellulosique.